# EUROPEAN PATENT APPLICATION

(11) **EP 4 644 246 A1**
(43) Date of publication of application: **05.11.2025**
(21) Application number: 24173364.1
(22) Date of filing: 30.04.2024
(51) Int. Cl.: B64D 11/02, B64D 11/04

(54) **ARCHITECTURE OF A HIGH-PRESSURE WATER SYSTEM ONBOARD AN AIRCRAFT**

(71) Applicant: Airbus Operations GmbH, 21129 Hamburg (DE)
(72) Inventor: Albers, Frederik, 21129 Hamburg (DE); Wenderoth, Stefan, 21129 Hamburg (DE); Kiehne, Oliver, 21129 Hamburg (DE); Heidtmann, Andreas, 21129 Hamburg (DE)

(57) **Abstract**

The present disclosure relates to an aircraft section (100) having a monument and a buffer region (110). The buffer region includes at least one buffer tank storing a water supply for at least one water consumer of the monument. The buffer region does not intersect with a dedicated three-dimensional space encased by the monument and including the water consumer.

## Description

The present disclosure generally relates to a high-pressure water system on-board an aircraft. Particularly, the present disclosure relates to an aircraft section and corresponding aircraft, where a buffer tank of a high-pressure water system is provided in a region not intersecting with a space encased by a monument.

In a conventional aircraft, water is stored in a centralised water tank and distributed via a pipe network towards consumer equipment. The pipes of the network are usually made from stainless steel or titanium and the water is conveyed therethrough at a pressure level corresponding to a consumer pressure level, i.e. a pressure required at the water consumers.

A further water distribution system is disclosed in EP 3 385 163 A1 and includes flexible hoses of smaller diameter than conventional steel or titanium pipes. The water is conveyed through such flexible hoses at a higher pressure to compensate for the smaller diameter. At the end of each hose is a decentralised pressureless buffer tank for storing water to be supplied to associated water consumer equipment.

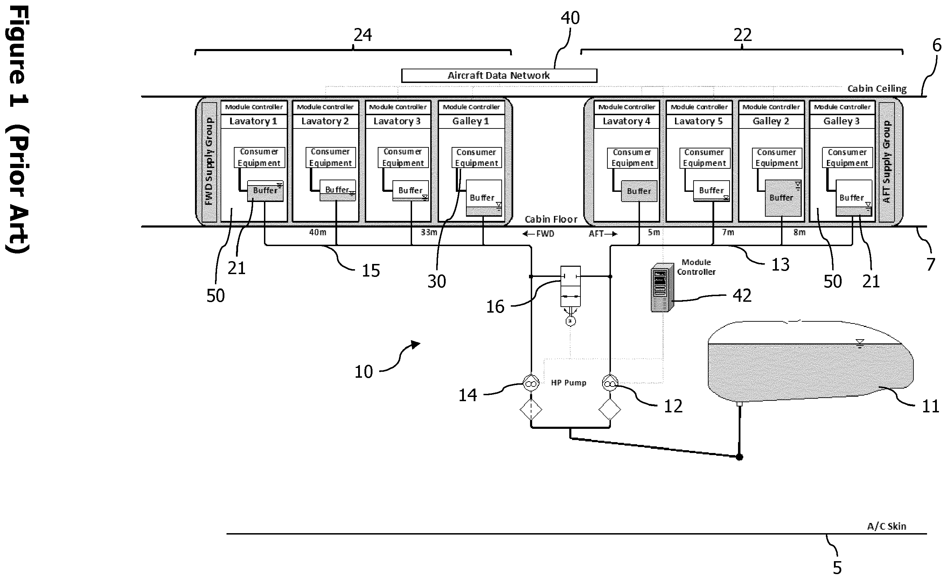

Figure 1 schematically illustrates a similar high-pressure water distribution system 10 having a central water tank 11 and one or more high-pressure pumps 12, 14. The water is distributed to water consumer groups 22, 24, such as the forward supply group 24 and the aft supply group 22. Each group consists of a plurality of monuments 50, such as the exemplarily illustrated lavatories and galleys.

Each monument 50 is equipped with a decentralised buffer tank 21 that stores water supplied by one of the high-pressure hoses 13, 15. The water in the decentralised buffer tank 21 can then further be supplied at a consumer pressure level to an associated consumer equipment 30.

It is an object of the present disclosure to further improve such high-pressure water system.

This object is solved by the present invention as defined in the independent claims. Preferred embodiments are defined by the dependent claims.

According to a first aspect to better understand the present disclosure, a section of an aircraft is disclosed, wherein the aircraft has a plurality of buffer tanks supplying water to water consumer units and a high pressure water (distribution and/or supply) system configured to convey water to the plurality of buffer tanks under a pressure higher than a pressure required for a water consumer of the water consumer units.

The aircraft section comprises a monument encasing a dedicated three-dimensional space, wherein the monument includes in the dedicated space at least one water consumer. Such a monument can be a lavatory, a galley, a shower, a water fountain or the like, which are an internal component or structure that is installed in the aircraft usually after the primary structure and the cabin floor has been installed. In any case, the monument includes a water consumer, such as a faucet, a toilet bowl, a shower, a water fountain, a galley insert, such as a faucet, a beverage maker, a steam oven or the like, and/or other water dispensing or water consuming components.

The monument includes, besides the water consumer, usually a wall, ceiling, and/or floor or similar structures that define a space envelope, i.e. the outer dimensions of the monument. The outer dimensions of the monument encase the dedicated three-dimensional space, hence, delimit the dedicated three-dimensional space of the monument.

The aircraft section further comprises a buffer region including at least one of the plurality of buffer tanks storing a water supply for the at least one water consumer of the monument. The buffer region does not intersect with the dedicated three-dimensional space of the monument. In other words, the buffer tank is installed outside of the monument, i.e., exterior to the dedicated three-dimensional space of the monument.

This allows reducing the size of the monument, which follows a trend to gain more space for passengers in the aircraft. In addition, already existing or legacy monuments can still be installed and supplied with water by the new high pressure water distribution and/or supply system. In addition, even a reuse of existing monuments and an adaptation of aircrafts in service could be achieved.

As a mere example, a monument forming a lavatory, on the one hand, shall be reduced in size, and, on the other hand, shall provide sufficient space for the passengers, including passengers of reduced mobility, in order to achieve a comfortable lavatory. Likewise, a monument forming a galley, on the one hand, shall be reduced in size for additional passenger seats, and on the other hand, shall provide a maximum of commercially usable space (e.g., for galley inserts increasing comfort (such as a coffeemaker or the like) and for a sufficient number of trolleys).

Providing the buffer region outside of the space envelope of the monument allows achieving both aims.

In an implementation variant, (besides the buffer tank) the buffer region can further comprise one or more of the following means: at least one valve, at least one sensor, at least one conveying device, at least one controller, at least one overflow means (such as an overflow line), at least one ventilation means (such as a ventilation line), at least one pressure reservoir, and at least one water heater. It is to be understood that the buffer region is not limited to include these devices and means, but can include further components to provide water to the water consumer. All of these components are arranged outside of the dedicated three-dimensional space of the monument.

In an implementation variant, the buffer tank can be implemented as a pressureless (or pressure free) buffer, i.e. the water stored in the buffer tank is not pressurised, but is stored at an ambient (atmosphere) pressure. This allows installing the buffer tank in complex installation environments. As a mere example, the shape of the buffer region can be formed to match any complex installation environment.

Alternatively, the buffer tank can be implemented as a tank storing/buffering water under pressure.

In an implementation variant, the aircraft section can further comprise a cabin floor, on which the monument is arranged. The buffer region can be located underneath the cabin floor. Thus, the buffer tank can be provided in a vicinity of the water consumer(s) without reducing the size of the dedicated three-dimensional space of the monument.

In an implementation variant, the aircraft section can further comprise a floor structure (carrying the actual horizontal plane cabin floor), wherein preferably a height of the buffer region corresponds at most to a height of the floor structure. In other words, the buffer region is arranged underneath the cabin floor and inside a space delimited by the cabin floor and an underside of the floor structure. Thus, the buffer tank can be installed in a space-saving manner inside of the aircraft and in close vicinity to the water consumer. In addition, since the buffer region adjacent to the floor structure is usually accessible from a cargo area underneath the floor beam, repair, maintenance and replacement of the buffer tank can be more easily achieved.

In an implementation variant, the floor structure can include a floor beam or a floor grid. As a mere example, a plurality of floor beams can be arranged along a transverse direction of the aircraft carrying the cabin floor. Likewise, floor beams arranged along a transverse direction and a longitudinal direction of the aircraft can form a floor grid. It is to be understood that the floor structure is not restricted to beams, but can include any type of carrier or support that provides a (free) space allowing spatial integration of the buffer region.

In an implementation variant, the aircraft section can further comprise a buffer holding assembly mounted to the floor structure. The at least one buffer tank can be arranged on the buffer holding assembly. Since the floor structure is designed to carry loads including the buffer tank (which is conventionally provided in the monument) is not additionally stressed due to the buffer tank. As a mere example, the buffer holding assembly can be mounted to one or more floor beams of the floor structure.

In an implementation variant, the aircraft section can further comprise an aircraft door in an outer skin of the aircraft. The buffer region can be arranged adjacent to the aircraft door. The aircraft door can be a regular aircraft door allowing passengers to enter and leave the aircraft. Usually, a monument including a water consumer is installed in an area close to such aircraft door. For instance, when entering the aircraft, the first monument is usually a galley and/or a lavatory. Thus, providing the buffer region adjacent to the aircraft door allows provision of a decentralised water buffer tank close to water consumers. It is to be understood that "adjacent to the aircraft door" in this disclosure refers to an area or region above as well as below the cabin floor. This phrase is to be understood as an area or region having a higher probability that a monument including a water consumer is installed in this area or region.

In an implementation variant, the aircraft section can further comprise a pressure cabin component delimiting a pressurised cabin of the aircraft. The pressurised cabin can be a portion of the aircraft that is regularly pressurised during a flight of the aircraft, such as a passenger cabin, a cargo area and a cockpit. The pressure cabin component can be any component surrounding such aircraft portion and delimiting the pressurised cabin.

Furthermore, the buffer region can be arranged between the monument and the pressure cabin component. Usually, the pressure cabin component has a round shape, while a monument regularly has straight walls or a rectangular shape or rectangularly shaped portions. Thus, certain areas between the monument and the pressure cabin component may be empty and, hence, can be used as the buffer region.

In an implementation variant, the pressure cabin component can be an outer skin of the aircraft or a pressure bulkhead in an aft region of the aircraft. The outer skin as well as the pressure bulkhead have a round/curved shape, so that the empty area will most likely be present between the monument and the outer skin or pressure bulkhead.

In an implementation variant, the aircraft section can further comprise a buffer holder mounted to an exterior of the monument or an interior of the pressure cabin component. The at least one buffer tank can be arranged on or at the buffer holder. On the one hand, the buffer holder can be mounted to the monument before installing the monument in the aircraft cabin, so that the buffer tank can be preinstalled outside of the aircraft or at a different position, where the buffer region can be easily reached. On the other hand, the buffer holder and, hence, the buffer tank can already be installed in the aircraft by mounting it to the interior of the pressure cabin component. In this regard it is to be understood that the buffer holder can be mounted not only directly to the outer skin, but also to a primary structure connected to the outer skin, such as a frame, stringer, clip or the like.

In an implementation variant, the aircraft section can further comprise a water conveying device conveying water from the at least one buffer tank to the at least one water consumer. Thus, the water conveying device conveys the water to the water consumer and further allows providing a pressure level of the water sufficient for the water consumer to operate. As a mere example, water conveying device can be arranged in the buffer region.

Furthermore, the aircraft section can further comprise a controller configured to control the water conveying device. As a mere example, the controller can control a speed or conveying rate of the conveying device. This allows controlling a volume and/or mass flow of water from the buffer tank to the water consumer.

In an implementation variant, the controller can be configured to operate the water conveying device depending on a number or type of water consumers of the at least one water consumer requesting water. In other words, if more than one water consumer requests water at the same time, the conveying device is to be operated to convey more water (e.g., at a higher pressure, mass flow, volume flow, etc.). Likewise, depending on the type of water consumer, the conveying device is to be operated to convey more or less water. For example, a faucet or shower or the like may require more water than flushing a toilet, while the toilet requires a higher pressure than other water consumers. This further allows switching off the water conveying device, if no water is requested by a water consumers (i.e., the number of water consumers requesting water is zero). The water conveying device can be operated in an energy efficient manner.

In an implementation variant, the controller can be configured to operate the water conveying device continuously to supply water to the at least one water consumer having a predefined pressure level and/or predefined flow rate at the at least one water consumer. Such predefined pressure level and/or flow rate can be set depending on the type of water consumer. As a mere example, a toilet requires a higher pressure for flushing the toilet bowl than a coffeemaker, water dispenser or faucet. Thus, the conveying device can be operated in a manner optimised for the water consumer(s) installed downstream of the conveying device. It is to be understood that the water conveying device can be operated to supply the water within a predefined pressure level range. Thus, the predefined pressure level is not restricted to a specific pressure value, but can be set to be within the pressure level range.

Moreover, due to the continuously supplied water pressure, the response time after activating a water consumer is at a minimum or zero (compared to the implementation variant where the conveying device is operated depending on the number of water consumers requesting water). This increases comfort for the users of the water consumers.

Irrespective of the manner of operating the water conveying device, in an implementation variant, a communication between the controller and the water consumer is provided. As a mere example, the controller can be informed about the activation of a water consumer, such as opening a faucet or flushing a toilet. Such communication can be achieved by an electric and/or (analogue/digital) data signal identifying the water consumer to the controller as well as the activation/deactivation of the water consumer. It is to be understood that the controller can receive communication from more than one water consumer, so that the number and type of activated water consumers at the same time can be derived by the controller.

In an implementation variant, the aircraft section can further comprise at least one water pipe connecting the water conveying device and the at least one water consumer, and a pressure equalising reservoir fluidly connected to the at least one water pipe and configured to equalise a pressure of the water in the at least one water pipe. Such pressure equalising reservoir allows avoiding a fluctuation of the water pressure at the consumer that may be recognised by a user thereof. On the other hand, the pressure equalising reservoir may also be employed to facilitate the predefined pressure continuously supplied to the water consumer(s). As a mere example, the pressure equalising reservoir can be or include a vessel, so that the water from the at least one water pipe acts against a gas volume. In this regard, the pressure equalising reservoir may be equipped with an elastic membrane or bellow therein.

It is to be understood that the pressure equalising reservoir allows compensating pressure fluctuations of the conveying device (in both cases of operating the conveying device, i.e. on request or continuously), and pressure accumulation in the at least one water pipe (e.g. until a predetermined/predefined water pressure level has been reached). In addition, the pressure equalising reservoir also allows omitting a communication between the controller or the water conveying device and the water consumer. The pressure equalising reservoir maintains the pressure at the water consumer, and the water conveying device may be operated depending on the sensor signal of a pressure sensor provided at the water conveying device. For instance, if the water pressure level drops at the sensor, the conveying device can be activated. This allows using the water supply system of the present disclosure with existing monuments and existing water consumers that may not be capable of communicating with the controller or water conveying device.

In an implementation variant, the aircraft section can further comprise at least one additional monument each including one or more further water consumers. All water consumers of the at least one additional monument can receive water from the at least one buffer tank of the buffer region. Thus, although decentralised buffer tanks are used in the aircraft, more than one water consumer and/or more than one monument having at least one water consumer can be supplied by the same decentralised buffer tank. Particularly, if the monuments and/or water consumers are arranged close to one another, the piping between the common buffer tank and the water consumers can still be kept simple.

Moreover, the aircraft section can be prepared with the buffer region and the at least one buffer tank installed therein. At any time of operating the aircraft, the number of monuments and/or the number of water consumers in the aircraft section can be changed, while the buffer tank remains. Likewise, the buffer region may be provided in the aircraft section as a free space, where a water buffer tank (and further equipment) can be installed later (which allows saving weight, instead of carrying a non-used buffer tank). Thus, the space forming the buffer region is not used for installation of other components until a water buffer tank installation is necessary. Thus, a flexible use of the aircraft and a flexible installation of monuments and water consumers is achieved by the aircraft section of the first aspect.

In an implementation variant, the size of the buffer tank can be customised depending on the number and/or type of water consumers that are to be supplied with water from the buffer tank. Likewise, the number of buffer tanks in the buffer region can be customised depending on the number and/or type of water consumers. As a mere example, the space of the buffer region may be set larger than the space required for one buffer tank, so that a differently sized buffer tank and/or a different number of buffer tanks can be installed in the buffer region, when necessary.

According to a second aspect to better understand the present disclosure, an aircraft comprises an aircraft section according to the first aspect or one or more of its variants.

In an implementation variant, the aircraft can further comprise a central water tank configured to store water to be distributed to the plurality of decentralised buffer tanks. As a mere example, one or more conveying devices and high-pressure water hoses can be provided to convey water from the central water tank to each of the decentralised buffer tanks.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates a high pressure water system according to the prior art;
- Figure 2: schematically illustrates an aircraft having several sections to provide a buffer region;
- Figure 3: schematically illustrates a longitudinal cross-section of an aircraft section including a buffer region;
- Figure 4: schematically illustrates aircraft sections including dedicated spaces for monuments and buffer regions; and
- Figure 5: schematically illustrates a cross-section of an aircraft section including a monument and a buffer region.

In the following description, for purposes of explanation and not limitation, specific details are set forth in order to provide a thorough understanding of the present disclosure. It will be apparent to one skilled in the art that the present disclosure may be practiced in other implementations that depart from these specific details.

Figure 1 schematically illustrates a high pressure water system according to the prior art. Specifically, Figure 1 exemplarily illustrates a centralised water tank 11 and a plurality of buffer tanks 21, wherein one decentralised buffer tank 21 is arranged in one monument. Furthermore, a length of the pipes 13, 15 of the high-pressure water distribution system 10 are exemplarily given, which allows identifying the weight saving of high-pressure water hoses 13, 15 of the present disclosure compared to conventional steel or titanium pipes. A cross feed valve 16 may further be present, in order to provide redundancies in the water distribution systems 10.

The pumps 12, 14 and/or other components of the high-pressure water distribution system 10 can be controlled via an aircraft data network 40 and/or a controller 42, which may be connected to the aircraft data network 40.

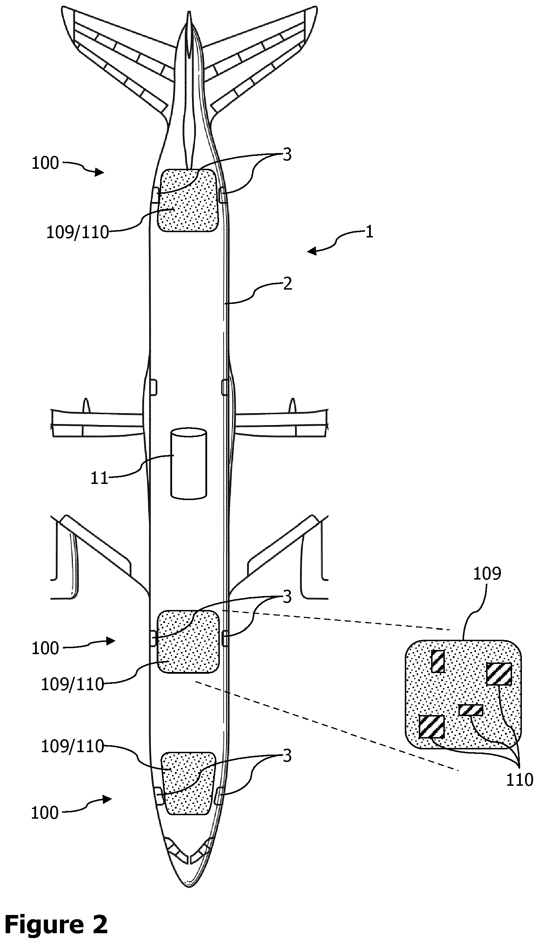

Figure 2 schematically illustrates an aircraft 1 having several aircraft sections 100, each configured to provide a buffer region 110. In more detail, the aircraft 1 as illustrated has an outer skin 2 and several doors 3. In the vicinity of an aircraft door 3, through which passengers can enter and leave the aircraft 1, are often one or more monuments (not illustrated in Figure 2) installed, that include one or more water consumers. As a mere example, such monuments can be a lavatory, galley, a shower, a water dispenser or the like. The dotted areas 109 in Figure 2 indicate areas that can include one or more buffer regions 110 (illustrated in the enlarged illustrated area 109), in which at least one decentralised water buffer tank can be installed to supply water to the monument(s) in the respective area 109. In other words, in the dotted areas 109 one or more buffer regions 110 (illustrated as hashed regions) can be provided. This may include the installation of a buffer tank 21 or providing a "stay out zone", where no other component is installed to allow a later installation of the buffer tank 21. The size of such a "stay out zone" 110 may be chosen depending on the largest possible buffer tank 21 or the size of a buffer tank 21 and further equipment required to operate the buffer tank 21, which will also be provided in the buffer region 110. Figure 2 illustrates stay out zones 109 in different sizes for illustrative purposes only.

It is to be understood that the buffer region(s) 110 and "stay out zones" 109 may not only be provided in the vicinity of an aircraft door 3. For instance, an aircraft 1 may be designed having a flexible zone, in which the later installed equipment is not fixed or not known at the time of assembly of the aircraft, such as the installation of passenger seats or monuments, including a water consumer and the like. Furthermore, the flexible zone may also allow installation of different passenger classes (e.g., first class, business class and economy class or the like), so that during the operation of the aircraft the installed equipment may change.

The aircraft of Figure 2 can include portions of the high-pressure water system 10, as illustrated in Figure 1. For instance, a centralised water tank 11 can be provided in the aircraft 1, from which each buffer tank can be (re-) filled with water, such as through high-pressure water hoses 13, 15 (not illustrated in Figure 2).

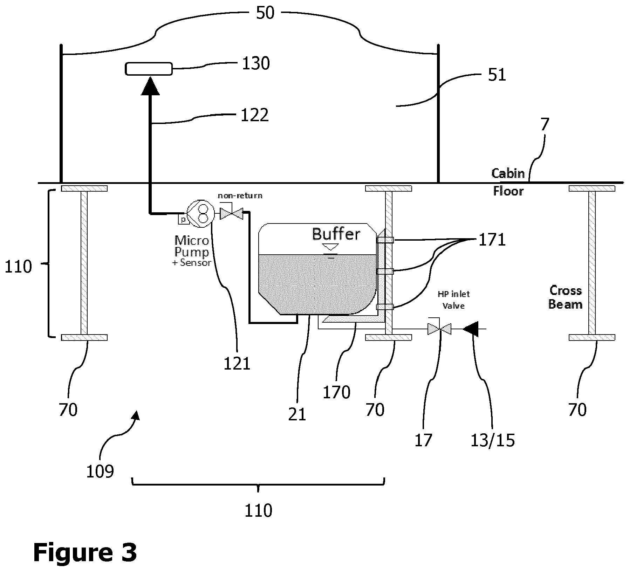

Figure 3 schematically illustrates a longitudinal cross-section of an aircraft section 100 including a buffer region 110. As a mere example, the cross-section of Figure 3 can correspond to one or more of the dotted "stay out zones" 109 and the hashed buffer regions 110 of Figure 2. It is to be understood that Figure 3 does not include all details of conventional components for sake of clarity of the drawing. As a mere example, the buffer tank 21 is simplified and does not include, for example, an overflow or ventilation line.

Specifically, in the exemplary aircraft section 100 is a monument 50 (only schematically illustrated by bottom portions of two walls) that includes at least one water consumer 130. In more detail, the monument 50 encases a dedicated three-dimensional space 51, in which the water consumer 130 is disposed. The water consumer 130 can be a faucet, a toilet flushing component, a water dispenser, and in case of a galley: a coffeemaker, beverage maker, a water dispenser, a steam oven, or the like.

The aircraft section comprises a cabin floor 7 on which the monument 50 is arranged, while the buffer region 110 is located underneath the cabin floor 7. This allows separating the buffer region 110 from the dedicated three-dimensional space 51 encased by the monument 50. The cabin floor 7 is carried by a floor structure, schematically illustrated as a plurality of floor beams 70, which can be arranged substantially along a transverse axis of the aircraft (left-direction in Figure 2). It is to be understood that the cabin floor 7 may also be carried by a floor grid including longitudinally arranged beams (not illustrated) or the like. The height of the buffer region 110 can correspond at most to the height of the floor beam 70. In other words, the buffer region 110 is arranged in a three-dimensional space delimited at the top by the cabin floor 7 and at the bottom by the underside of the floor beams 70. The side the buffer region 110 can be delimited by a arbitrarily chosen cross beams 70 as well as the outer skin 2 of the aircraft in the transverse direction.

In order to have one or more buffer tanks 21 included in the buffer region 110, a buffer holding assembly 170, 171 is mounted to one or more of the floor beams 70 (or other floor structure component). As a mere example, Figure 3 illustrates fasteners 171 used to mount a buffer holder 170 to a floor beam 70. It is to be understood that the buffer holder 170 can likewise be mounted to two adjacent floor beams 70.

The water from the decentralised buffer tank 21 can then be conveyed by a conveying device 121 (such as a pump or micropump) to the water consumer 130 in the monument 50 via a water consumer pipe 122. It is to be understood that more than one water consumer 130 can be provided in the monument 50 and/or more than one monument 50 can be arranged on the cabin floor 7 and its/their water consumer(s) 130 can be supplied with water from the buffer tank 21 via a network of water consumer pipes 122.

As can be derived from Figures 2 and 3, the buffer region 110 can be an arbitrarily chosen area in the aircraft 1, where a water consumer 130 is installed or may be installed at a later time. By providing the buffer tank 21 underneath the cabin floor 7, the layout of monuments 50 and water consumers 130 above the cabin floor 7 can be flexibly changed, while only a few water consumer pipes 122 may be changed in position and/or length. It is to be understood that the buffer tank 21 may also be relocated in the buffer region 110, depending on the layout of water consumers 130 above the cabin floor 7. As a mere example, the buffer tank 21 together with the buffer holding assembly 170, 171 may be moved to a different cross beam 70 (within the buffer region 110). Likewise, the number of buffer tanks 21 and/or the size of a buffer tank 21 arranged in one buffer region 110 can be changed depending on the number of monuments 50 and/or the number of water consumers 130 arranged above the buffer region 110. In case of a plurality of buffer tanks 21, such buffer tanks 21 may be distributed over the buffer region 110 or may be provided at a single location and are fluidly connected to one another to form a larger buffer tank 21. Thus, the amount of buffered water can be adapted to the number of monuments 50 and/or water consumers 130.

Although Figure 2 illustrates buffer regions 110 in the vicinity of an aircraft door 3, it is to be understood that a buffer region 110 can also be provided at any section of the aircraft 1. For instance, depending on the layout of passenger seats and/or passenger classes in the aircraft 1, a buffer region 110 may be provided in an area between doors 3 (when viewing along a longitudinal direction of the aircraft, up-down direction in Figure 2). As a mere example, in first-class or business class a bar, galley and/or lavatory may be provided in a section 100 of the aircraft 1 that is away from an aircraft door 3. Furthermore, one or more monuments 50 having water consumers 130 can form a class divider between different passenger classes irrespective of a location of a door 3, such as in a flexible zone.

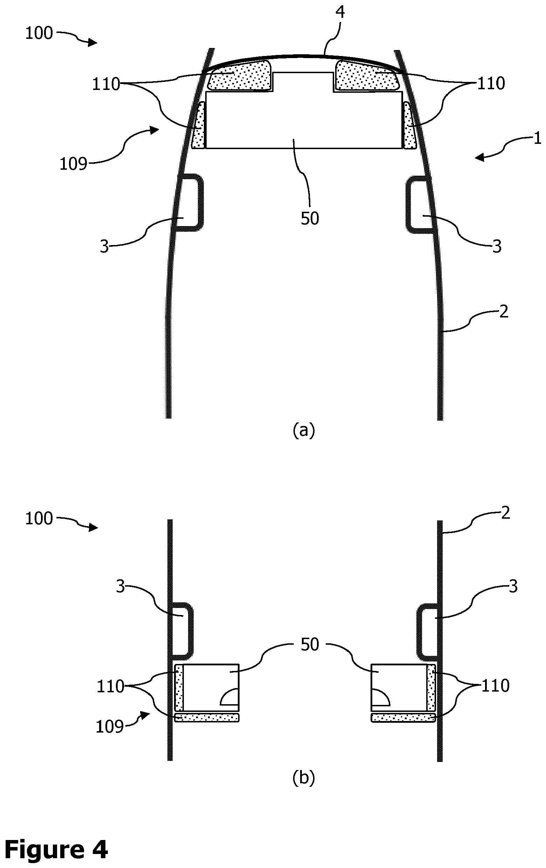

Figure 4 schematically illustrates aircraft sections 100 including dedicated spaces 109 for monuments 50 and buffer regions 110. For instance, the aircraft section 100 can further comprise a pressure cabin component delimiting a pressure cabin of the aircraft 1. Such pressure cabin component can be an outer skin 2 of the aircraft 1 and an aft pressure bulkhead 4 in the rear section of the aircraft 1. Each of these pressure cabin components 2, 4 delimits a pressurised cabin of the aircraft 1, including a passenger cabin, a cargo area, a cockpit and the like.

Figure 4 illustrates the aircraft sections 100 as a cross-section through the aircraft 1 above the cabin floor 7. On such floor 7 one or more monuments 50 can be provided. As mere examples, Figure 4(a) illustrates a galley arranged in front of the pressure bulkhead 4, and Figure 4(b) illustrates two lavatories provided adjacent to a respective aircraft door 3. In the floor plan of Figure 4, a buffer region 110 can be arranged between the monument 50 and the pressure cabin component 2, 4. Thus, the buffer region 110 including the buffer tank 21 can be behind a monument or next to a monument. As a mere example, the buffer region 110 can be above cabin floor 7, but can also be arranged underneath the cabin floor 7.

Furthermore, as illustrated in Figure 4(b), a buffer region 110 can also be arranged besides or next to a monument 50 in a direction not directly facing a pressure cabin component 2, 4. This may allow equipping existing aircrafts with a buffer region 110, where the buffer region 110 including a buffer tank 21 is more easily installed in the passenger cabin or underneath the cabin floor 7, but without intersecting with the dedicated three-dimensional space 51 of the monument 50.

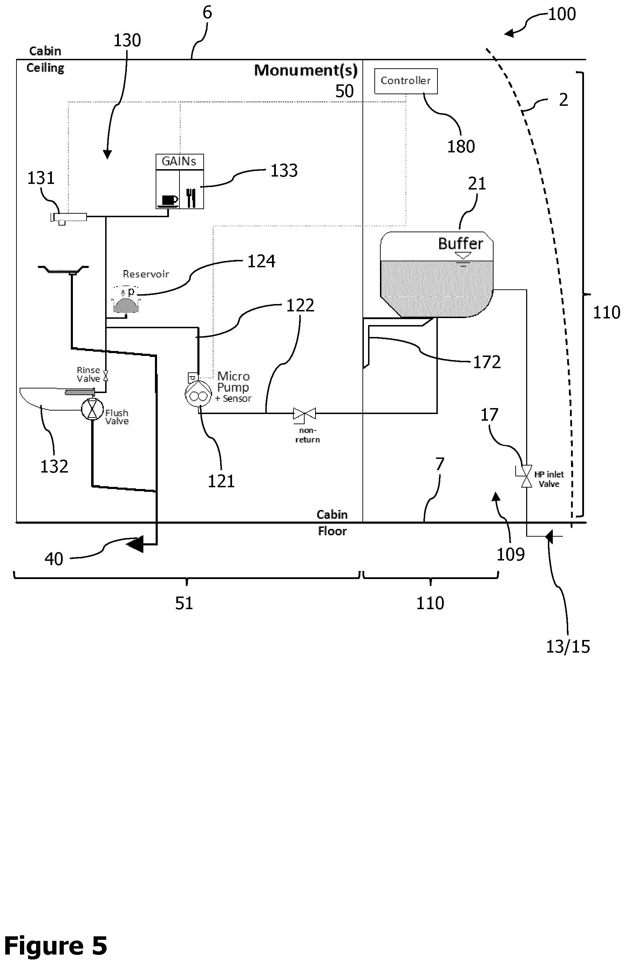

Figure 5 schematically illustrates a cross-section of an aircraft section 100 including a monument 50 and a buffer region 110. As can be derived from Figure 5, a buffer holder 172 can be mounted to an exterior of the monument 50, and the buffer tank 21 is mounted to the buffer holder 172. Alternatively or additionally, the buffer holder 172 can be mounted to a pressure cabin component, such as outer skin 2 (exemplary and schematically illustrated as dashed line in Figure 5). It is to be understood that the sidewall of the monument 50 may deviate from a straight vertical line as illustrated in Figure 5, but may be adapted to the curved contour of the outer skin 2. Furthermore, it is to be understood that the dashed curved line in Figure 5 can likewise represent an aft pressure bulkhead 4.

In any case, due to the curved form of the pressure cabin component 2, 4 there is regularly a buffer region 110 available between the outer side of the monument 50 and the pressure cabin component 2, 4. It is to be understood that the vertical location of the buffer region 110 is not restricted to the illustrated middle area between cabin floor 7 and cabin ceiling 6. Instead, the buffer region 110 and, hence, the buffer tank 21, can be provided anywhere between the cabin floor 7 and the cabin ceiling 6, or alternatively underneath the cabin floor 7, depending on the available space between the monument 50 and pressure cabin component 2, 4. Moreover, the location of the buffer region 110 can also be chosen depending on a risk of freezing temperatures, in order to provide freezing protection for the buffer tank 21 and its water carrying equipment. As a mere example, directly at the outer skin 2 of the aircraft 1 a risk of freezing is higher than further to the centre of the aircraft 1.

Furthermore, the monument 50 of Figure 5 includes exemplary water consumers 130 usually installed in a lavatory, such as a faucet 131 and toilet bowl 132, but also shows water consumers 130 usually installed in a galley, such as galley inserts 133 and a faucet 131.

Furthermore, the system to distribute water from the buffer tank 21 to the water consumers 130 comprises consumer water pipes 122 and a conveying device 121 to convey water from buffer tank 21 to one or more of the water consumers 130. A controller 180 may control the conveying device 121. This may be achieved by operating the water conveying device 121 depending on a number or type of water consumers 130 requesting water at the same time (or a flow characteristic of such a water consumer 130). For instance, the higher the number of simultaneously used water consumers 130, the higher is the throughput of the conveying device 121 (e.g., controlled by operating a conveying speed, mass or volume flow of water, etc.).

On the other hand, the controller 180 may control the conveying device 121 to continuously supply water to the at least one water consumer 130 at a predefined pressure. In order to equalise the pressure in the pipe 122 downstream of the conveying device 121, a pressure equalising reservoir 124 may be provided that is configured to equalise a pressure of the water in the at least one water pipe 122.

Likewise, the pressure equalising reservoir 124 can be provided, while the conveying device 121 is operated depending on the number or type of water consumers requesting water at the same time period
While Figures 3 and 5 illustrates only one monument, this is to be understood as a mere example. In an aircraft section 100 as illustrated in Figures 2 and 4, a plurality of monuments 50 and/or a plurality of water consumers 130 may be arranged. This plurality of water consuming monuments 50 and/or water consumers 130 may be supplied with water from one buffer tank 21 and water distribution network 121, 122 (, 124) dedicated to these water consumers 130. Of course, a plurality of buffer tanks 21 can be provided for one aircraft section 100 having a plurality of water consumers 130.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A section (100) of an aircraft (1) having a plurality of buffer tanks (21) supplying water to water consumer units (22, 24) and a high pressure water system (10) configured to convey water to the plurality of buffer tanks (21) under a pressure higher than a pressure required for a water consumer (30) of the water consumer units (50), the aircraft section (100) comprising:
a monument (50) encasing a dedicated three-dimensional space (51),
wherein the monument (50) includes in the dedicated space (51) at least one water consumer (30, 130); and
a buffer region (110) including at least one of the plurality of buffer tanks (21) storing a water supply for the at least one water consumer (30, 130) of the monument (50),
wherein the buffer region (110) does not intersect with the dedicated three-dimensional space (51) of the monument (50).

2. The aircraft section (100) of claim 1, further comprising:
a cabin floor (7), on which the monument (50) is arranged,
wherein the buffer region (110) is located underneath the cabin floor (7).

3. The aircraft section (100) of claim 1 or 2, further comprising:
a floor structure (70),
wherein preferably a height of the buffer region (110) corresponds at most to a height of the floor structure (70).

4. The aircraft section (100) of claim 3, further comprising:
a buffer holding assembly (170, 171) mounted to the floor structure (70),
wherein the at least one buffer tank (21) is arranged on the buffer holding assembly.

5. The aircraft section (100) of one of claims 1 to 4, further comprising:
an aircraft door (3) in an outer skin (2) of the aircraft (1),
wherein the buffer region (110) is arranged adjacent to the aircraft door (3).

6. The aircraft section (100) of claim 1, further comprising:
a pressure cabin component (2, 4) delimiting a pressurised cabin of the aircraft (1),
wherein the buffer region (110) is arranged between the monument (50) and the pressure cabin component (2, 4).

7. The aircraft section (100) of claim 6, wherein the pressure cabin component is an outer skin (2) of the aircraft or a pressure bulkhead (4) in an aft region of the aircraft (1).

8. The aircraft section (100) of claim 6 or 7, further comprising:
a buffer holder (172) mounted to an exterior of the monument (50) or an interior of the pressure cabin component (2, 4),
wherein the at least one buffer tank (21) is arranged on the buffer holder.

9. The aircraft section (100) of one of claims 1 to 8, further comprising:
a water conveying device (121) conveying water from the at least one buffer tank (21) to the at least one water consumer (30, 130); and
a controller (180) configured to control the water conveying device (121).

10. The aircraft section (100) of claim 9, wherein the controller (180) is configured to operate the water conveying device (121) depending on a number or type of water consumers (30, 130) of the at least one water consumer requesting water, or
wherein the controller (180) is configured to operate the water conveying device (121) continuously to supply water to the at least one water consumer (30, 130) having a predefined pressure level or pressure range at the at least one water consumer (30, 130).

11. The aircraft section (100) of claim 9 or 10, further comprising:
at least one water pipe (122) connecting the water conveying device (121) and the at least one water consumer (30, 130); and
a pressure equalising reservoir (124) fluidly connected to the at least one water pipe (122) and configured to equalise a pressure of the water in the at least one water pipe (122).

12. The aircraft section (100) of one of claims 1 to 11, further comprising:
at least one additional monument (50) each including one or more further water consumers (30, 130),
wherein all water consumers (30, 130) of the at least one additional monument (50) receive water from the at least one buffer tank (21) of the buffer region (110).

13. An aircraft (1), comprising:
at least one aircraft section (100) of one of claims 1 to 12.
